# EUROPÄISCHE PATENTSCHRIFT

(11) **EP 1 480 015 B1**
(45) Veröffentlichungstag und Bekanntmachung des Hinweises auf die Patenterteilung: **22.03.2017**
(21) Anmeldenummer: 04011906.7
(22) Anmeldetag: 19.05.2004
(51) Int. Cl.: G01D 5/26

(54) **Verfahren und Vorrichtung zum Messen eines modulierten Lichtsignals**
Method and device for measuring a modulated light signal
Procédé et dispositif pour mesurer un signal optique modulé

(30) Priorität: 20.05.2003 DE 10322552
(43) Veröffentlichungstag der Anmeldung: 24.11.2004
(73) Patentinhaber: Reime, Gerd, 75328 Schömberg (DE)
(72) Erfinder: Reime, Gerd, 75328 Schömberg (DE)
(74) Vertreter: Reinhardt, Harry

(56) Entgegenhaltungen:
- EP-A- 0 534 154
- WO-A-03/009476
- DE-A- 2 849 186
- DE-B3- 10 300 223
- US-A- 4 960 996
- US-A- 5 666 037

## Beschreibung

Die Erfindung betrifft eine Vorrichtung zum Messen eines modulierten, ersten Lichtsignals nach dem Oberbegriff des Anspruches 1 und ein Verfahren zum Messen eines modulierten, ersten Lichtsignals nach dem Oberbegriff des Anspruches 12.

Aus der dem Oberbegriff der unabhängigen Ansprüche zu Grunde liegenden US 5,666,037 A ist es zur Regelung eines Scheibenwischersensors bekannt, die Fahrzeugscheibe als "Umlenkmittel" für modulierte Lichtsignale zu nutzen, die taktweise von wenigstens einer Licht aussendenden Lichtquelle und einer Kompensationslichtquelle stammen. Wird die Fahrzeugscheibe benetzt, wird Licht ausgekoppelt, was zu einem geänderten Empfangssignal und damit Regelsignal für die Stärke der Lichtsignale auch unter Fremdlicheinfluss führt. Das Regelsignal wird zur Betätigung der Scheibenwischer ausgewertet. Die Fahrzeugscheibe als Umlenkmittel für das nicht ausgekoppelte Licht lenkt die Lichtsignale so um, dass sie im Wesentlichen parallel oder winkelgleich in den Empfänger treffen.

Aus der älteren deutschen Patentanmeldung DE 103 00 223.5 ist eine Kompensation eines Empfangssignals bestehend aus der Summe zweier Messstrecken mittels einer Kompensationslichtquelle bekannt. Dabei ist eine Lichtquelle zum Aussenden eines ersten modulierten Lichtsignals vorgesehen, die von einem Empfänger empfangen werden. Durch eine Regelung wird dieses Lichtsignal mit einem weiteren modulierten Lichtsignal aus der Kompensationslichtquelle so kompensiert, dass am Empfänger im Wesentlichen ein Gleichlicht ansteht. Auf die Art der Einkopplung der Lichtsignale, insbesondere der Kompensationslichtquelle in die Photodiode wird nicht näher eingegangen.

Derartige Vorrichtungen werden zur Detektion einer Reflektion eines Lichtstrahls an einer reflektiven Oberfläche eingesetzt. Verwendet werden als Sender und Empfänger üblicherweise Leuchtdioden und gegebenenfalls Photodioden. Ein Beispiel stellt eine Sensoranordnung zur Erfassung von Personen zur automatischen Öffnung von Türen dar. Ein solcher Sensor ist meist oberhalb der zu steuernden Tür angeordnet und soll in einer Entfernung von z. B. 3 m eine sich nähernde Person erkennen, um dieser die Tür z. B. zu öffnen. Eine geeignete Lösung eines solchen Sensors weist bisher für Sender und Empfänger je eine vollständig getrennte Optik auf. Das ausgesandte Signal z. B. ein mit 100 KHz getaktetes Lichtsignal mit einer für das Auge nicht wahrnehmbaren Wellenlänge von z. B. 950 nm wird an einer sich nähernden Person reflektiert und diese Änderung im Empfänger wahrgenommen. Das ausgesandte Licht wird jedoch nicht nur an einer sich nähernden Person reflektiert, sondern auch an beliebigen, im Reflektionsbereich befindlichen Oberflächen. Dadurch entsteht im Empfänger ein ständiger getakteter Signalanteil. Dieses permanent vorhandene Signal kann in der Photodiode durch Fremdlicht in seiner Amplitude beeinflusst werden. Diesen Effekt zeigen mehr oder weniger alle Photodioden.

Selbstverständlich wird eine Entkopplung der fremdlichtbedingten Gleichstromanteile sowie eine korrekt ausgeführte Photostromkompensation durch entsprechende Schaltungsmaßnahmen vorausgesetzt. Wird einfallendes Fremdlicht z. B. in seiner Intensität verändert, so ändert sich auch die Amplitude des empfangenen Infrarotsignals. Somit kann nicht eindeutig unterschieden werden, ob sich eine Person dem Sensor genähert hat oder ob z. B. durch eine beliebige Abschattung oder Reflektion nur der Fremdlichtanteil beeinflusst wurde. Zur Verringerung der Fertigungskosten könnte auch ein für Sender und Empfänger gemeinsames Fenster vorgesehen werden, allerdings kann es durch Lichtleitung im Fenstermaterial zu einer Einkopplung direkt vom Sender in den Empfänger kommen. Auch dieser Anteil kann durch Fremdlicht beeinflusst werden und zu Fehlinterpretationen führen. Diese Fehlinterpretationen liegen daran, dass bei Empfang eines getakteten Signals durch eine Photodiode in der Kennlinie der Photodiode beständig ein Bereich überstrichen wird, der der wechselnden empfangenen Lichtintensität entspricht, die ihrerseits wiederum einen entsprechenden Photostrom erzeugt. Je nach Steilheit dieser Lichtintensität-Photostrom Kennlinie ist die dabei zwischen den Grenzen des Bereichs entstehende Differenz des Photostroms verschieden groß, was wiederum zu einem unterschiedlichen Signalpegel führt. Damit verschiebt der Fremdlichtanteil den Mittelwert der Photostromdifferenz zwischen dem oberen und unteren Wert des Photostroms auf der Kennlinie. Bei der Kompensation des Empfangsignals von Null wird der "Bereich" zu einem Punkt, also dimensionslos. Dieser Punkt kann beliebig auf der Kennlinie verschoben werden, denn dieser Punkt bleibt Punkt, ohne dass Kennliniensteilheit hierauf einen Einfluss hat. Insofern sollte eine möglichst vollständige Fremdlichtkompensation stattfinden.

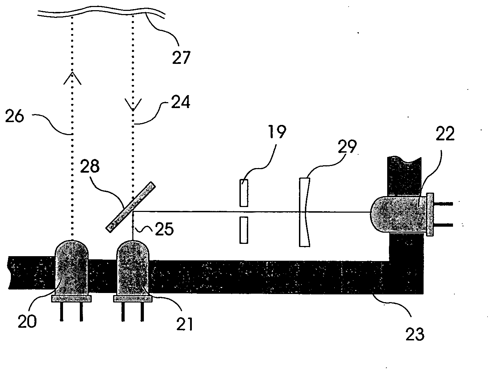

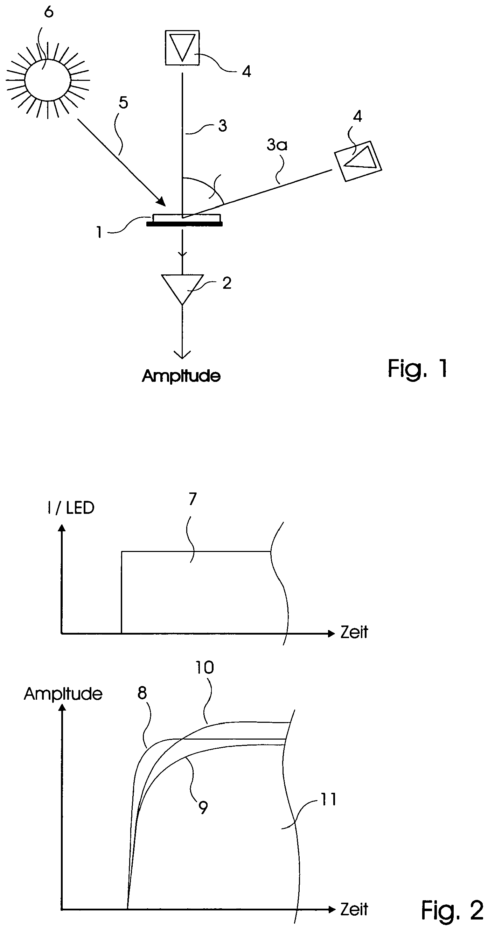

Dennoch stellt sich insbesondere bei entsprechenden Genauigkeitsanforderungen der durchzuführenden Messungen das Problem ein, dass Kompensationen nicht vollständig möglich sind, insbesondere wenn Licht nicht unmittelbar von vorne in die Photodiode 1 einfällt. Dies wird anhand der Figuren 1 und 2 erläutert. Bei einer Einkopplung eines Signals 11 durch die Lichtquelle 4 direkt von vorne in die Photodiode 1 wird bei einem Pulssprung 7 (Fig. 2) die kürzeste Anstiegszeit 8 erreicht. Diese wird auch in der Regel in den Datenblättern im Hinblick auf die entsprechende Photodiode angegeben. Weniger bekannt ist, dass bei seitlicher Einkopplung eines Signals durch die Lichtquelle 4 entlang Lichtstrahl 3a die Anstiegszeit 9 bereits bei einem Einfallwinkel von 45° drastisch zunimmt. Zudem hat im Fall der seitlichen Einkopplung Fremdlicht 5 einer Fremdlichtquelle 6 einen wesentlich größeren Einfluss auf die nach dem Vorverstärker 2 gemessene Amplitude und die Anstiegszeit 10. Eine Erhöhung der Sperrspannung auf z. B. 25 V kann diesen Effekt bei einigen Dioden deutlich mindern, jedoch lässt sich bei den allgemein üblichen Versorgungsspannungen von 3 - 5 V eine so hohe Sperrspannung nur mit zusätzlichem Aufwand erreichen.

Bei entsprechend hoher Taktfrequenz kann ein Signal mit geringer Anstiegszeit und daher hohen Spektralanteilen nicht mit einem Signal mit längerer Anstiegszeit und fehlenden höherfrequenten Spektralanteilen exakt zu Null kompensiert werden. Es verbleibt ein taktsynchrones Fehlsignal. Der bei vollständiger Kompensation entstehende dimensionslose Punkt wird damit wieder zu einer Fremdlichteinflüssen unterliegenden Strecke auf der Kennlinie der Photodiode. Optimal für die Kompensation ist also ein gleicher Einfallswinkel für das Empfangs- und das Kompensationssignal. Da jedoch die höchste Empfindlichkeit bei einem Einfallswinkel von 0° gegeben ist, müsste eine Kompensationslichtquelle ebenfalls im Strahlengang bei 0° angeordnet sein. Dies führt naturgemäß zu einer Abschattung des Empfangssignals durch die Kompensationslichtquelle.

### Physikalisch lässt sich dies wie folgt erklären:

In das Halbleitermaterial der Photodiode einfallendes Licht erzeugt Ladungsträgerpaare. Diese Ladungsträgerpaare werden durch ein von außen angelegtes elektrisches Feld getrennt und den Anschlüssen zugeführt. Typischerweise wird hierzu eine PiN-Struktur verwendet. Das Substratmaterial ist n-dotiert und rückseitig mit dem Leadframe leitend verbunden. Auf dem Substratmaterial befindet sich eine dünne Schicht von nahezu undotiertem (intrinsischem) Silizium. Hierauf liegt eine sehr dünne stark p-dotierte Schicht.

Diese bildet die Anode der Photodiode. Legt man nun eine Spannung an die in Sperrrichtung gepolte Photodiode an, so entsteht in der intrinsischen Zone ein starkes elektrisches Feld. Senkrecht auf die Photodiode einfallendes Licht durchdringt die p-Zone und generiert in der i-Zone Ladungsträgerpaare. Diese werden durch das anliegende elektrische Feld getrennt und erzeugen den messbaren Photostrom. Hierbei handelt es sich somit um einen Diffusionsstrom. Aufgrund der Beschleunigung der Ladungsträger gelangen diese schnell zu den Anschlüssen. Üblicherweise mit der Sättigungsgeschwindigkeit für Elektronen bzw. Löcher in Silizium.

Licht, das hingegen seitlich auf die Photodiode fällt, erzeugt Ladungsträger im Substrat oder der intrinsischen Zone, allerdings außerhalb oder im Randbereich des elektrischen Feldes. Die so erzeugten Ladungsträger driften mit geringen Wirkungsgrad langsam zum elektrischen Feld und werden dort dem messbaren Photostrom zugeführt. Aufgrund der größeren Zeitkonstante der Ladungsträgerdrift ergibt sich so eine wesentlich größerer Zeitkonstante der Sprungantwort. Bei typischen Photodioden ergeben sich für seitlich einfallendes Licht eine etwa um den Faktor 20 größere Zeitkonstante, die das Empfangssignal stark verzerrt bzw. in der Phasenlage verschiebt.

Dieser Effekt ist umso stärker ausgeprägt, je schlechter die Kante der Photodiode geschützt ist. Photodioden, die am Rand eine starke Dotierung aufweisen (z.B. einen Guard-Ring) sind hiervon kaum betroffen. Es ist aber bei nahezu allen Photodioden eine Winkelabhängigkeit der Anstiegszeit zu beobachten, da Licht je nach Einfallswinkel, auch wenn der Lichtstrahl vollständig durch die p-Zone einfällt, unterschiedlich tief in die i-Zone eindringt. Insbesondere wird bei schräg einfallendem Licht ein Teil der Ladungsträgerpaare bereits in der p-Zone generiert. Diese Ladungsträger driften langsam zur i-Zone, wodurch sich die messbare Anstiegszeit ebenfalls verlängert.

Somit sind für die Geschwindigkeit einer Photodiode eine Vielzahl von einzelnen Vorgängen verantwortlich. Lediglich für nahezu senkrecht einfallendes Licht ist die elektrische Zeitkonstante der Photodiode (Produkt aus Widerstand im Empfangskreis und Sperrschichtkapazität) dominierend. Sobald der Driftphotostrom einen wesentlichen Beitrag zum Photostrom liefert, ist diese Zeitkonstante nicht mehr dominierend und die Photodiode wird messbar langsamer.

Aus dem Stand der Technik sind verschiedene optische Umlenkmittel an sich z.B. aus der EP 0 534 154 A2, DE 28 49 186 C2, DE 35 44 558 C1, DE 100 27 239 A1, DE 197 06 612 C2 und DE 37 10 041 A1 bekannt.

Ausgehend von diesem Stand der Technik liegt der vorliegenden Erfindung die Aufgabe zugrunde, auch unter widrigen Umständen eine bessere bzw. vollständige Kompensation von Fremdlichteinflüssen zu erreichen.

Diese Aufgabe wird durch eine Vorrichtung und ein Verfahren mit den Merkmalen der Ansprüche 1 und 12 gelöst.

Vorrichtung und Verfahren zielen darauf ab, dass das Licht aus der Kompensationslichtquelle und das reflektierte Lichtsignal im Wesentlichen parallel oder winkelgleich, zumindest aber wirkungsgleich auf den Empfänger eintreffen. Dadurch sollen die oben erwähnten Nachteile vermieden werden. Das Licht der ersten Lichtquelle ist die Reflektion einer beliebig angeordneten Sendelichtquelle oder der Summe verschiedener Sendelichtquellen an einer oder mehreren Reflektionsstellen, während die zweite Lichtquelle zur Fremdlichtkompensation dient.

Dabei lässt die Anordnung mittels eines Licht leitenden Bauelements ein erstes mit 0° zum Empfänger bzw. zur Photodiode eintreffendes Lichtsignal nahezu unbeeinflusst passieren, während eine zweite mit einem von 0° stark abweichenden Einfallswinkel auftreffendes Lichtsignal so umgelenkt wird, dass es im Wesentlichen parallel mit der ersten Lichtstrahlung den Empfänger trifft. Dabei sollte das Licht der ersten Lichtquelle möglichst nicht abgeschwächt werden, während das Licht der zweiten Lichtquelle nur zum Teil genutzt werden muss. Weitere Vorteile ergeben sich aus den Unteransprüchen.

Im Folgenden wird die Erfindung anhand der beigefügten Figuren näher erläutert. Es zeigen:
- Fig. 1: Eine schematische Darstellung eines frontalen und eines seitlichen Lichteinfalls sowie eines Lichteinfalls infolge von Fremdlicht,
- Fig. 2: den elektrischen Impuls der Lichtquelle sowie das am Empfänger auftretende Eingangssignal je nach Winkeleinfall des Lichtsignals und Einfluss des Fremdlichts,
- Fig. 3: ein getaktetes Sendesignal einer LED sowie verschiedene Signalverläufe des Empfangssignals je nach Fremdlichteinfluss und Winkeleinfall,
- Fig. 4: eine erste erfindungsgemäße Anordnung mit Umlenkmitteln,
- Fig. 5: eine Schaltung mit mehreren Umlenkmitteln,
- Fig. 6: eine Draufsicht auf eine Scheibe mit Empfänger und Kompensationslichtquelle,
- Fig. 7: einen Schnitt durch die Scheibe, der nicht durch den Bereich 56 gelegt ist,
- Fig. 8: einen Schnitt durch die Scheibe im Bereich der Kompensationslichtquelle.

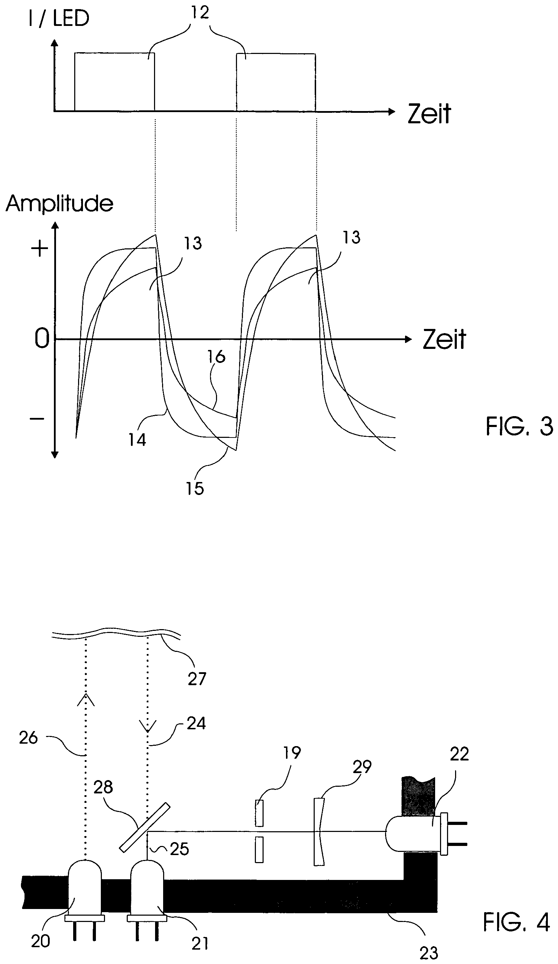

Während die Fig. 1 und 2 den Einfluss von Einstrahlungswinkel und Fremdlicht auf das empfangene Signal zeigen, zeigt Fig. 3 den Einfluss derartiger Randbedingungen bei einem getakteten Sendesignal 12 einer Leuchtdiode. In der unteren Kurve ist 13 das Ausgangssignal eines Vorverstärkers mit Hochpassverhalten, 14 das Signal bei demselben Lichtsignal frontal in die Photodiode bei 0° Einfallswinkel, 15 das Signal bei seitlicher Einstrahlung bei 45° Einfallswinkel und Fremdlichteinfluss und Signal 16 den Einfluss lediglich bei seitlicher Einstrahlung mit 45° Einfallswinkel. Die Signalverläufe verdeutlichen, dass unter diesen Bedingungen eine Kompensation stets zu Fehlimpulsen führen muss.

Figur 4 zeigt ein Ausführungsbeispiel einer weitestgehend störungsfreien Lichtsignalkompensation insbesondere für Fremdlicht. Im Ausführungsbeispiel wurden 5 mm Leuchtdioden und Photodioden eingesetzt. Im Gehäuse 23 sind eine Lichtquelle 20 als Sende-LED sowie eine Kompensationslichtquelle 22 in Form einer Kompensations-LED eingesetzt. Anstelle der Leuchtdioden können auch andere Lichtquellen verwendet werden, sofern bei diesen ähnliche Probleme wie eingangs erläutert auftreten. Das von der Lichtquelle 20 ausgesandte Licht wird über den Lichtstrahl 26 zu einem Objekt 27 gestrahlt, an dem das Licht reflektiert wird. Der reflektierte Lichtstrahl 24 gelangt als ein im Folgenden als erstes Lichtsignal bezeichnetes Lichtsignal zu einer Photodiode als Empfänger 21, nachdem er durch ein permeables Element 28 hindurchgeleitet wurde. Das permeable Element kann eine Plexiglasscheibe oder ein permeabler Spiegel sein. Beim Durchgang durch diese Plexiglasscheibe gehen ca. 4 % der Lichtleistung verloren. Dies ist allerdings nicht von großer Bedeutung. Es ist andererseits durchaus ausreichend, dass auch nur ca. 4 % des Lichts der Kompensationslichtquelle 22, wenn es auf das permeable Element 28 als Umlenkmittel trifft, auf den Empfänger 21 umgelenkt werden. Das weitere modulierte Lichtsignal der Kompensationslichtquelle trifft in Folge des permeablen Elements 28 also parallel, zumindest aber winkelgleich mit dem am Objekt 27 reflektierten Licht als paralleler Lichtstrahl 25 in den Empfänger 21 ein.

Damit besitzt die Vorrichtung zum Messen eines modulierten ersten Lichtsignals wenigstens eine das Licht aussendende Lichtquelle 20, wenigstens einen Empfänger 21 zum Empfangen von Lichtsignalen und Regelungsmittel. Mit den Regelungsmitteln wird das erste Lichtsignal mit den weiteren modulierten Lichtsignalen so kompensiert, dass am Empfänger 21 im Wesentlichen ein Gleichlichtsignal ansteht. Um dies zu erreichen, sind Umlenkmittel z. B. in Form des permeablen Elements 28 vorgesehen, die wenigstens eines der Lichtsignale so umlenken, dass die Lichtsignale im Wesentlichen parallel oder winkelgleich in den Empfänger 21 treffen. Es wäre allerdings auch möglich, das erste Lichtsignal umzulenken oder beide Lichtsignale so umzulenken, dass sie parallel in den Empfänger 21 treffen.

Dabei ist die wenigstens eine Kompensationslichtquelle 22; 39, 40 zum Aussenden des weiteren Lichtsignals so angeordnet, dass das weitere Lichtsignal mittels der Umlenkmittel im Wesentlichen parallel zum im Wesentlichen unveränderten ersten Lichtsignal am Empfänger 21 eintrifft. Sowohl die Lichtquellen 20 als auch der Empfänger 21 können durch Leuchtdioden gebildet sein. Ein optimales Ergebnis ergibt sich, wenn das erste Lichtsignal etwa in der Normalen zur Oberfläche des Empfängers 21 auftrifft, und damit dann parallel auch das weitere Lichtsignal mit einem Winkel von 0° zur Normalen auf die Oberfläche des Empfängers 21 auftrifft. Das Umlenkmittel umfasst z.B. das zumindest im Strahlengang des ersten Signals angeordnete, im Wesentlichen für das erste Signal permeable Element 28 in Form eines Spiegels oder eines geeigneten anderen Elements.

Grundsätzlich können Kompensationslichtquelle 22, Lichtquelle 20 sowie Empfänger 21 auch in der gleichen Ebene angeordnet werden, sofern lediglich das weitere Lichtsignal wenigstens ein zweites Mal umgelenkt wird. Bedarfsweise können im Strahlengang des weiteren Lichtsignal eine Blende 19 und/oder ein Diffusor 29 vorgesehen sein. Der Diffusor führt zu einem weitestgehend parallelen Abstrahlen des weiteren Lichtsignals, während die Blende dafür sorgt, dass gezielt Licht möglichst frontal auf die Photodiode als Empfänger 21 trifft.

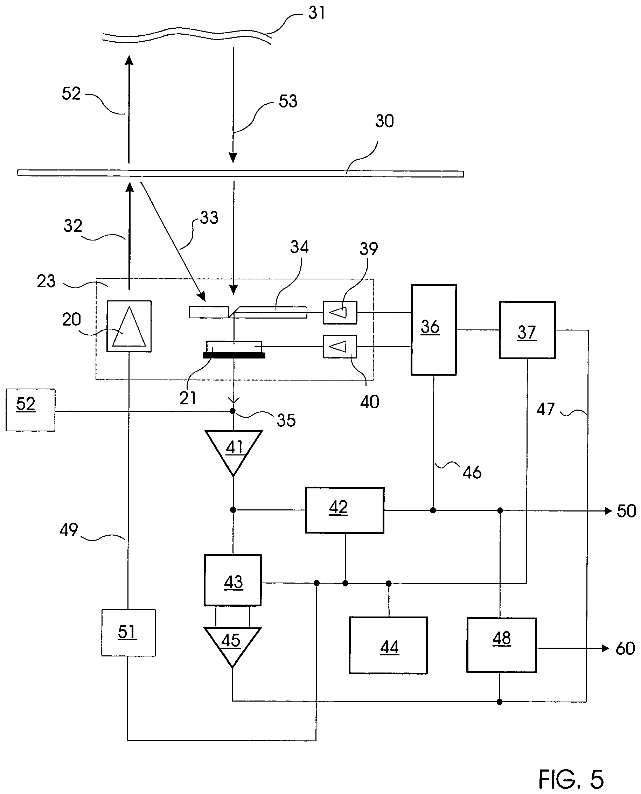

Nicht immer ist es möglich, ein empfangenes Lichtsignal mit nur einer Kompensationslichtquelle vollständig zu Null zu kompensieren. Dies ist besonders dann der Fall, wenn das reflektierte Licht aus zwei verschiedenen Richtungen auf den Empfänger 21 trifft. Ein Beispiel ist in Figur 5 dargestellt. Das Lichtsignal der Lichtquelle 20 als Sende-LED wird zum Teil an der translucenten Oberfläche 30 schräg zur Photodiode mittels des reflektierten Lichtstrahls 33 zurückreflektiert. Gleichzeitig trifft aber der an einer weiter entfernten reflektiven Oberfläche eines Objekts 31 reflektierte Lichtstrahl 53 frontal auf den Empfänger 21. Somit entsteht eine Summe aus Stromsignalen in der Photodiode mit unterschiedlichen Anstiegszeiten.

Zur Kompensation eines derartigen Lichtsignals können wenigstens zwei Kompensationslichtquellen 39, 40 z.B. in Form von wenigstens zwei Leuchtdioden vorgesehen sein. Diese beiden Kompensationslichtquellen 39, 40 bilden gemeinsam das weitere Lichtsignal. Das Licht der einen Kompensationslichtquelle 39 wird über die als Umlenkmittel ausgebildeten Auskoppelmittel 34a im Wesentlichen frontal auf den Empfänger 21 abgestrahlt, während die andere Kompensationslichtquelle 40 seitlich in den Empfänger strahlt. Mit einem Impulsleistungsverteiler 36 wird das Kompensationssignal auf die beiden Kompensationslichtquellen 39, 40 so verteilt, dass am Ausgang des Vorverstärkers 41 kein Restsignal aufgrund unterschiedlicher Anstiegszeiten zwischen Sende- und Kompensationsphase ansteht. Dazu wird das Ausgangssignal des Vorverstärkers 41 jeweils im ersten Teil der Phase, z. B. in den ersten 30 % der Phase auf eine Differenz zwischen der Sendephase und der Kompensationsphase z.B. im Vorzeichen untersucht. Dieser kann z. B. während der Sendephase positive, bzw. negative Anteile aufweisen. Diese Anteile werden mit den Anteilen der Kompensationsphase verglichen und mittels des Impulsleistungsverteilers 36 auf gleiche Amplitude gebracht. Eine Ausregelung auf Null ist in der Regel zwar nicht möglich, da insbesondere Leuchtdioden Anstiegszeiten haben. Wesentlich für die korrekte Funktion ist jedoch nicht ein Nullsignal, sondern sind gleiche Anstiegszeiten für Empfangs- und Kompensationssignal. Mit dieser Regelung wird ausschließlich der Fehler bei ungleichem Einfallswinkel von Empfangs- und Kompensationssignal korrigiert.

Parallel zu dieser Regelung wird über den Synchrondemodulator 43 das vom Vorverstärker stammende Signal wieder auf die verschiedenen Lichtquellen 20 aufgeteilt. Über Synchrondemodulator 43, Vergleicher 45 und Regelstufe 37 wird das Kompensationssignal beider Kompensationslichtquellen 39, 40 so in der gemeinsamen Amplitude geregelt, dass am Ausgang des Vorverstärkers während der Sende- und Kompensationsphase der gleiche zeitliche Mittelwert der Signale ansteht.

Am Ausgang der Signalauswertung 42 steht das Kompensationsverhältnis-Steuersignal 46 an, das entsprechend dem Leistungsverhältnis zwischen der Kompensations-LED mit 0° Einkoppelung und der Kompensations-LED mit 90° Einkoppelung ausgeregelt ist. 0° entspricht dabei einem Lichteinfall normal zur Oberfläche der Photodiode. Dieses Steuersignal 46, das auch als Signal 50 weiter verwendet werden kann, beinhaltet als dynamisches Element die Reflektion an einer reflektiven Oberfläche eines Objekts 31 außerhalb der translucenten Oberfläche 30 und dessen laterale Bewegung. Das Empfangssignal 35 des Empfängers 21 wird einerseits einer Photostromkompensation 52 zugeführt, andererseits im Vorverstärker 41 verstärkt. Nach Synchrondemodulator 43 und Vergleicher 45 steht mit dem Steuersignal 47 die Gesamt-Kompensationsleistung und damit auch die Reflektion an dem Objekt 31 als Signal an. Addiert man die Steuersignale 50 und 47 im richtigen Verhältnis in der Signaladdierstufe 48 entsteht ein Ausgangssignal 60, dass die Reflektionsanteile der Lichtquelle 20 repräsentiert und vollständig von Fremdlichteinflüssen befreit ist. Das Signal aus dem Synchrondemodulator 43 wird über einen Inverter 51 als invertiertes Taktsignal 49 der Lichtquelle 20 zur Leistungsregelung der Lichtquelle zugeführt.

In der Praxis können die Lichtquelle 20, die Kompensationslichtquellen 39, 40 sowie die Photodiode als Empfänger 21 nebeneinander auf einer Platine angeordnet werden, z. B. auf einem SMD-Bauelement. Die Einkoppelung des weiteren Lichtsignals der Kompensations-LED kann über ein Kunststoffteil mit entsprechender Lichtumlenkung erfolgen. Im Ausführungsbeispiel wird z. B. ein Kunststoffteil in Form eines Lichtleiters 34 eingesetzt, der über ein Auskoppelmittel 34a verfügt. Ein derartiges Auskoppelungsmittel könnte einerseits das Ende des Lichtleiters sein, andererseits wie im vorliegenden Fall eine Auskoppelkerbe. Der Lichtleiter hat den Vorteil, dass er einerseits vom ersten Lichtsignal durchstrahlbar ist, andererseits aber für das weitere Lichtsignal als Übertragungs- und Umlenkmittel dient. Das Kunststoffteil kann z.B. auch zwei kleine Kerben zur Signalumlenkung aufweisen. Die erste dient zur Umlenkung des Lichts von der SMD-Leuchtdiode in Längsrichtung des Kunststoffteils, die zweite zur Umlenkung des im Kunststoff befindlichen Lichts in Richtung der Photodiode. Dieses Kunststoffteil kann auch Bestandteil einer Abdeckung sein. Durch Verschieben/Justieren der Auskoppelkerbe von der Photodiodenmitte hin zum Rand kann, wenn nötig, die Anstiegszeit bestimmt werden. Somit kann auch unter widrigen Umständen eine vollständige Kompensation des Empfangssignals erreicht werden.

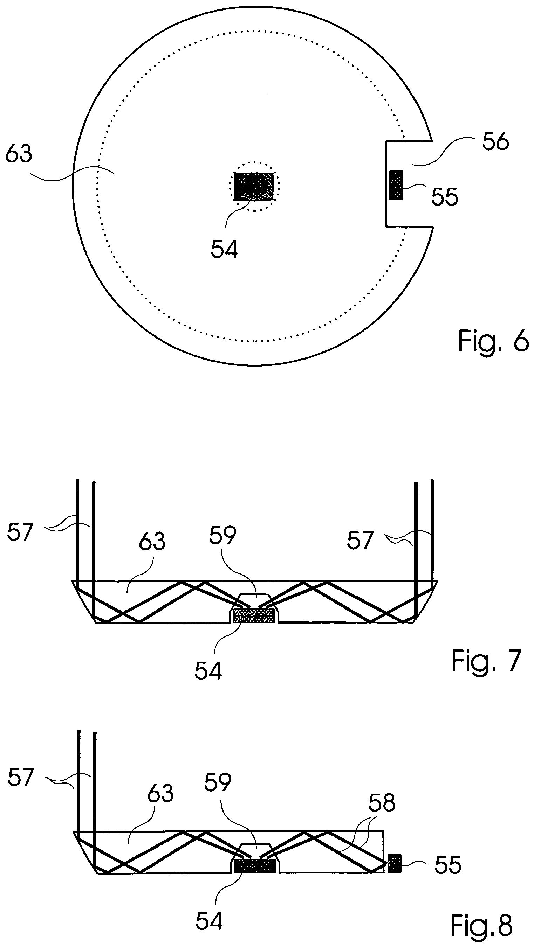

Zur winkelgleichen Einstrahlung des Kompensationslichtes mit dem Empfangslicht wird erfindungsgemäß eine Anordnung nach den Fig. 6 bis 8 verwendet werden. Dabei sammelt eine flache, für die empfangene Wellenlänge translucente Scheibe 63 an ihrem äußeren Rand senkrecht einfallendes Licht 57 und leitet es im Mittelpunkt der Scheibe auf eine entsprechend angeordnete Photodiode 54. Der Rand der Scheibe 63 kann so ausgebildet werden, das einfallendes Licht zu einem Punkt in der Mitte der Scheibe reflektiert wird. Innerhalb der Scheibe oder an der Scheibe befindet sich die Photodiode 54 als Empfänger vorzugsweise in einer Aussparung 59. Die Kompensationslichtquelle 55 ist gemäß Fig. 6 und 8 in einem Bereich 56 wie z.B. einer Ausnehmung der oder an der Scheibe 63 so angeordnet, das ihre Strahlung 58 in etwa den gleichen Weg zur Photodiode 54 nimmt bzw. mit dem im Wesentlichen gleichen Einfallswinkel, wie das am Rand eingestrahlte Licht, an der Photodiode 54 eintrifft.

Mit dieser Anordnung wird ein Effekt wie bei einer konventionellen Linse erreicht, ohne das die Bauhöhe einer Linse benötigt wird. Gleichzeitig kann die Kompensationslichtquelle 55 auf gleicher Ebene wie die Photodiode 54 angeordnet werden. Empfangs- und Kompensationslicht treffen mit gleichem Winkel auf die Photodiode, so das eine einwandfreie Kompensation des Empfangssignals zu Null erreicht werden kann. Die Scheibe ist im Ausführungsbeispiel flach, kann jedoch bedarfsweise auch gewölbt oder gewellt sein, wenn dies für den jeweiligen Anwendungsfall von Vorteil ist.

**Bezugszeichenliste**

| | | | |
|---|---|---|---|
| | | 28 | Permeables Element |
| 1 | Photodiode | 29 | Diffusor |
| 2 | Vorverstärker | 30 | Translucente Oberfläche |
| 3, 3a | Lichtstrahlen | 31 | Objekt |
| 4 | Lichtquelle | 32 | Ausgesandter Lichtstrahl |
| 5 | Fremdlicht | 33 | Reflektierter Lichtstrahl |
| 6 | Fremdlichtquelle | 34 | Lichtleiter |
| 7 | Pulssprung zur Lichtquelle | 34a | Auskoppelmittel |
| 8 | Anstiegszeit bei 0° Einfallswinkel | 35 | Empfangssignal |
| | | 36 | Impulsleistungsverteiler |
| 9 | Anstiegszeit bei 45° Einfallswinkel | 37 | Regelstufe |
| | | 39,40 | Kompensationslichtquelle |
| 10 | Anstiegszeit bei Fremdlicht | 41 | Vorverstärker |
| 11 | Signal entsprechend dem | 42 | Signalauswertung |
| | elektrischen Puls | 43 | Synchrondemodulator |
| 12 | Getaktetes Sendesignal | 45 | Vergleicher |
| 13 | Ausgangssignal Vorverstärker | 46 | Steuersignal für 36 |
| | | 47 | Steuersignal (Regelsignal) |
| 14 | Signal bei 0° Einfallswinkel | 48 | Signaladdierstufe |
| 15 | Signal bei 45° Einfallswinkel | 49 | Invertiertes Taktsignal |
| | und Fremdlichteinfluss | 50,60 | Ausgangssignal |
| 16 | Signal bei 45° Einfallswinkel | 51 | Inverter |
| 19 | Blende | 52 | Photostromkompensation |
| 20 | Lichtquelle | 53 | reflektierter Lichtstrahl |
| 21 | Empfänger | 54 | Photodiode |
| 22 | Kompensationslichtquelle | 55 | Kompensationslichtquelle |
| 23 | Gehäuse | 56 | Bereich |
| 24 | Reflektierter Lichtstrahl | 57 | einfallendes Licht |
| 25 | Paralleler Lichtstrahl | 58 | Strahlung von 55 |
| 26 | Lichtstrahl | 59 | Aussparung |
| 27 | Objekt | 63 | Scheibe |

## Patentansprüche

1. Vorrichtung zum Messen eines modulierten, ersten Lichtsignals mit
- wenigstens einer das Licht aussendenden Lichtquelle (20),
- wenigstens einer Kompensationslichtquelle (55) zum Aussenden eines weiteren modulierten Lichtsignals,
- wenigstens einem Empfänger (54) zum Empfang von Lichtsignalen,
- Regelungsmitteln, mit denen das erste Lichtsignal mit dem weiteren modulierten Lichtsignal so kompensiert wird, dass im Empfänger (21) im Wesentlichen ein Gleichlichtsignal ansteht,
- Umlenkmitteln, die wenigstens eines der Lichtsignale so umlenken, dass die Lichtsignale im Wesentlichen parallel oder winkelgleich in den Empfänger (21) treffen,
**dadurch gekennzeichnet, dass** der Empfänger (54) in einem oder an einem Licht leitenden, als Umlenkmittel für das von der Lichtquelle (20) kommende, erste Lichtsignal ausgebildeten Bauelement angeordnet ist, das quer zum Strahlengang des ersten Lichtsignals angeordnet ist und im Bereich des Empfängers ein Auskoppelmittel aufweist, und
dass die Strahlung (58) der Kompensationslichtquelle (55) so in das Bauelement eingekoppelt wird, dass die Strahlung parallel oder winkelgleich mit dem ersten Lichtsignal am Empfänger auftrifft.

2. Vorrichtung nach Anspruch 1, **dadurch gekennzeichnet, dass** die Umlenkmittel so angeordnet sind, dass das weitere Lichtsignal im Wesentlichen parallel oder winkelgleich zum im Wesentlichen unveränderten ersten Lichtsignal am Empfänger (21) eintrifft.

3. Vorrichtung nach Anspruch 1 oder 2, **dadurch gekennzeichnet, dass** das vorzugsweise im Strahlengang beider Lichtsignale angeordnete Umlenkmittel für das weitere Lichtsignal zu einem großen Teil durchlässig ist und/oder dass das Umlenkmittel ein zumindest im Strahlengang des ersten Lichtsignals angeordnetes, für das erste Lichtsignal im Wesentlichen permeables Element (28) umfasst..

4. Vorrichtungen nach einem der vorhergehenden Ansprüche, **dadurch gekennzeichnet, dass** das erste Lichtsignal etwa in der Normalen zur Oberfläche des Empfängers (21) auftrifft.

5. Vorrichtung nach einem der vorhergehenden Ansprüche, **dadurch gekennzeichnet, dass** die Lichtquelle (20) für das erste Lichtsignal und die Kompensationslichtquelle (22) für das weitere Signal im Wesentlichen in einer Ebene angeordnet sind und dass die Umlenkmittel so angeordnet sind, dass das weitere Lichtsignal bis zum Auftreffen am Empfänger (21) wenigstens einmal umgelenkt ist.

6. Vorrichtung nach einem der vorhergehenden Ansprüche, **dadurch gekennzeichnet, dass** im Strahlengang des weiteren Lichtsignal eine Blende (19) und/oder ein Diffusor (29) vorgesehen sind.

7. Vorrichtung nach einem der vorhergehenden Ansprüche, **dadurch gekennzeichnet, dass** wenigstens zwei Kompensationslichtquellen (39, 40), vorzugsweise Leuchtdioden, zur Bildung des weiteren Lichtsignals vorgesehen sind, von denen eine Lichtquelle Licht über das Umlenkmittel im Wesentlichen frontal auf den Empfänger (21) strahlt, während die andere Lichtquelle Licht seitlich in den Empfänger strahlt.

8. Vorrichtung nach Anspruch 7, **dadurch gekennzeichnet, dass** ein Impulsleistungsverteiler (36) zur Verteilung der Anteile des Lichtsignals vorgesehen ist, die auf die eine oder die andere Kompensationslichtquelle (39, 40) zur Kompensation entfallen.

9. Vorrichtung nach Anspruch 7 oder 8, soweit diese nicht auf den Anspruch 4 rückbezogen sind, **dadurch gekennzeichnet, dass** das erste Lichtsignal schräg und/oder aus verschiedenen Richtungen auf den Empfänger (21) trifft.

10. Vorrichtung nach einem der vorhergehenden Ansprüche, **dadurch gekennzeichnet, dass** der Lichtleiter (34) vom ersten Lichtsignal durchstrahlbar ist und/oder relativ zum Empfänger (21) unter Änderung der Position der Auskoppelmittel (34a) bewegbar ist.

11. Vorrichtung nach einem der vorhergehenden Ansprüche, **dadurch gekennzeichnet, dass** das Bauelement eine flache Scheibe (63) ist, wobei vorzugsweise die Kompensationslichtquelle im Bereich (56) einer Aussparung der Scheibe (63) angeordnet ist und/oder wobei vorzugsweise der Empfänger in einer innenliegenden, vorzugsweise mittigen Aussparung (59) der Scheibe (63) angeordnet ist.

12. Verfahren zum Messen eines modulierten, ersten Lichtsignals mit einer Vorrichtung mit
- wenigstens einer das Licht aussendenden Lichtquelle (20),
- wenigstens einer Kompensationslichtquelle (55) zum Aussenden eines weiteren modulierten Lichtsignals,
- wenigstens einem Empfänger (21) zum Empfang von Lichtsignalen,
- Regelungsmitteln, mit denen das Lichtsignal mit einem weiteren modulierten Lichtsignal zum Erhalt im Wesentlichen eines Gleichlichtsignals am Empfänger kompensiert wird,
- wobei wenigstens eines der Lichtsignale so umgelenkt wird, dass die Lichtsignale im Wesentlichen parallel in den Empfänger (21) treffen.
**dadurch gekennzeichnet, dass** ein Licht leitendes Bauelement, das quer zum Strahlengang des ersten Lichtsignals angeordnet ist, das von der Lichtquelle (20) kommende, erste Lichtsignal an den Empfänger (54) umlenkt und im Bereich des Empfängers auskoppelt, und
dass die Strahlung (58) der Kompensationslichtquelle (55) so in das Bauelement eingekoppelt wird, dass die Strahlung parallel oder winkelgleich mit dem ersten Lichtsignal am Empfänger auftrifft.

## Claims

1. Device for measuring a modulated, first light signal, said device comprising
- at least one light source (20) emitting the light,
- at least one compensation light source (55) for emitting a further modulated light signal,
- at least one receiver (54) for receiving light signals,
- control means, with which the first light signal is compensated with the further modulated light signal, such that there is substantially a constant light signal present in the receiver (21),
- deflection means, which deflect at least one of the light signals, such that the light signals reach the receiver (21) substantially in parallel or at the same angle,
**characterised in that** the receiver (54) is arranged in a, or on a light-guiding component formed as deflection means for the first light signal coming from the light source (20), which component is arranged transversely to the beam path of the first light signal and has a coupling out means in the region of the receiver, and
**in that** the radiation (58) of the compensation light source (55) is coupled into the component such that the radiation impinges on the receiver parallel to or at the same angle as the first light signal.

2. Device according to claim 1, **characterised in that** the deflection means are arranged such that the further light signal reaches the receiver (21) substantially parallel to or at the same angle as the substantially unchanged first light signal.

3. Device according to claim 1 or 2, **characterised in that** the deflection means arranged preferably in the beam path of both light signals is largely transparent to the further light signal, and/or **in that** the deflection means comprises an element (28) which is arranged at least in the beam path of the first light signal and which is substantially permeable to the first light signal.

4. Devices according to any one of the preceding claims, **characterised in that** the first light signal impinges approximately normal to the surface of the receiver (21).

5. Device according to any one of the preceding claims, **characterised in that** the light source (20) for the first light signal and the compensation light source (22) for the further signal are arranged substantially in one plane, and **in that** the deflection means are arranged such that the further light signal is deflected at least once before impinging on the receiver (21).

6. Device according to any one of the preceding claims, **characterised in that** a diaphragm (19) and/or a diffusor (29) are provided in the beam path of the further light signal.

7. Device according to any one of the preceding claims, **characterised in that** at least two compensation light sources (39, 40), preferably light-emitting diodes, are provided for forming the further light signal, one of which light sources radiates substantially frontally onto the receiver (21) via the deflection means, whereas the other light source radiates laterally into the receiver.

8. Device according to claim 7, **characterised in that** a pulse power distributor (36) is provided for distributing the proportions of the light signal which fall upon one or other of the compensation light sources (39, 40) for compensation.

9. Device according to claim 7 or 8, insofar as these do not refer back to claim 4, **characterised in that** the first light signal impinges on the receiver (21) obliquely and/or from different directions.

10. Device according to any one of the preceding claims, **characterised in that** the first signal can penetrate through the light guide (34) and/or the light guide is movable relative to the receiver (21), with a change in the position of the coupling out means (34a).

11. Device according to any one of the preceding claims, **characterised in that** the component is a flat plate (63), wherein the compensation light source is preferably arranged in the region (56) of a recess in the plate (63), and/or wherein the receiver is preferably arranged in an inwardly disposed, preferably central recess (59) in the plate (63).

12. Method for measuring a modulated, first light signal using a device comprising
- at least one light source (20) emitting the light,
- at least one compensation light source (55) for emitting a further modulated light signal,
- at least one receiver (21) for receiving light signals,
- control means, with which the light signal is compensated with a further modulated light signal in order to obtain substantially a constant light at the receiver,
- wherein at least one of the light signals is deflected such that the light signals reach the receiver (21) substantially in parallel,
**characterised in that** a light-guiding component, which is arranged transversely to the beam path of the first light signal, deflects the first light signal, coming from the light source (20), at the receiver (54) and couples out said light signal in the region of the receiver, and
**in that** the radiation (58) of the compensation light source (55) is coupled into the component such that the radiation impinges on the receiver parallel to or at the same angle as the first light signal.

## Revendications

1. Dispositif de mesure d'un premier signal lumineux modulé comportant :
- au moins une source de lumière (20) émettant de la lumière,
- au moins une source de lumière de compensation (55) pour l'émission d'un autre signal lumineux modulé,
- au moins un récepteur (54) pour la réception de signaux lumineux,
- des moyens de réglage, avec lesquels le premier signal lumineux est compensé avec l'autre signal lumineux de telle manière qu'un signal lumineux essentiellement égal soit obtenu dans le récepteur (21),
- des moyens de déviation, qui dévient au moins un des signaux lumineux, de telle sorte que les signaux lumineux se rencontrent essentiellement parallèlement ou avec un même angle dans le récepteur (21),
**caractérisé en ce que** le récepteur (54) est disposé dans ou au niveau d'un composant électronique conducteur de lumière conçu comme un moyen de déviation pour le premier signal lumineux provenant de la source de lumière (20), lequel composant électronique est disposé perpendiculairement au parcours lumineux du premier signal lumineux et présente un moyen de découplage dans la zone du récepteur, et
**en ce que** le rayonnement (58) de la source de lumière de compensation (55) est couplé dans le composant électronique de telle manière que le rayonnement arrive au niveau du récepteur parallèlement ou avec le même angle que le premier signal lumineux.

2. Dispositif selon la revendication 1, **caractérisé en ce que** le moyen de déviation est disposé de telle sorte que l'autre signal lumineux arrive au niveau du récepteur (21) essentiellement parallèlement ou avec un même angle par rapport au premier signal lumineux essentiellement inchangé.

3. Dispositif selon la revendication 1 ou 2, **caractérisé en ce que** le moyen de déviation disposé de préférence dans le parcours lumineux des deux signaux lumineux est en grande partie transparent pour l'autre signal lumineux et/ou **en ce que** le moyen de déviation comprend un élément essentiellement perméable (28) au premier signal lumineux disposé au moins dans le parcours lumineux du premier signal lumineux.

4. Dispositif selon l'une des revendications précédentes, **caractérisé en ce que** le premier signal lumineux arrive à peu près à la normale de la surface du récepteur (21).

5. Dispositif selon l'une des revendications précédentes, **caractérisé en ce que** la source de lumière (20) pour le premier signal lumineux et la source de lumière de compensation (22) pour l'autre signal lumineux sont disposés essentiellement dans un plan et **en ce que** les moyens de déviation sont disposés de telle sorte que l'autre signal lumineux est dévié au moins une fois jusqu'à l'arrivée au niveau du récepteur (21).

6. Dispositif selon l'une des revendications précédentes, **caractérisé en ce qu'**un écran (19) et/ou un diffuseur (29) sont prévus dans le parcours lumineux de l'autre signal lumineux.

7. Dispositif selon l'une des revendications précédentes, **caractérisé en ce qu'**au moins deux sources de lumière de compensation (39, 40), de préférence des diodes électroluminescentes, sont prévues pour la formation de l'autre signal lumineux, à partir desquelles une source de lumière émet de la lumière à travers le moyen de déviation essentiellement frontalement vers le récepteur (21), tandis que l'autre source de lumière émet de la lumière latéralement vers le récepteur.

8. Dispositif selon la revendication 7, **caractérisé en ce qu'**un distributeur de puissance d'impulsion (36) est prévu pour la distribution des parties du signal lumineux qui échappent à la compensation par l'une ou l'autre des sources de compensation (39 ,40).

9. Dispositif selon la revendication 7 ou 8, lorsque celles-ci ne dépendent pas de la revendication 4, **caractérisé en ce que** le premier signal lumineux arrive de travers et/ou avec des directions différentes sur le récepteur (21).

10. Dispositif selon l'une des revendications précédentes, **caractérisé en ce que** le conducteur de lumière (34) peut être traversé par le premier signal lumineux et/ou est déplaçable par rapport au récepteur (21) en modifiant la position du moyen de découplage (34a).

11. Dispositif selon l'une des revendications précédentes, **caractérisé en ce que** le composant électronique est un disque plat (63), la source de lumière de compensation étant de préférence dans la zone (56) d'un évidement du disque (63) et/ou le récepteur étant de préférence dans un évidement (59) situé à l'intérieur de préférence au milieu du disque (63).

12. Procédé de mesure d'un premier signal lumineux modulé à l'aide d'un dispositif comportant :
- au moins une source de lumière (20) émettant de la lumière,
- au moins une source de lumière de compensation (55) pour l'émission d'un autre signal lumineux modulé,
- au moins un récepteur (21) pour la réception de signaux lumineux,
- des moyens de réglage, avec lesquels le signal lumineux est compensé avec un autre signal lumineux modulé, pour l'obtention d'un signal essentiellement égal au niveau du récepteur,
- au moins l'un des signaux lumineux étant dévié de telle sorte que les signaux lumineux arrivent essentiellement parallèlement dans le récepteur (21),
**caractérisé en ce qu'**un composant électronique conducteur de lumière, qui est disposé perpendiculairement au parcours lumineux du premier signal lumineux, dévie le premier signal lumineux provenant de la source de lumière (20) vers le récepteur (54) et le découple dans la zone du récepteur, et
**en ce que** le rayonnement (58) de la source de lumière de compensation (55) est couplé dans le composant électronique de telle sorte que le rayonnement arrive au niveau du récepteur parallèlement ou avec le même angle que le premier signal lumineux.
